# EUROPÄISCHE PATENTSCHRIFT

(11) **EP 0 487 761 B1**
(45) Veröffentlichungstag und Bekanntmachung des Hinweises auf die Patenterteilung: **08.02.1995**
(21) Anmeldenummer: 90122599.5
(22) Anmeldetag: 27.11.1990
(51) Int. Cl.: H02K 5/22, H02P 8/00

(54) **Kleinmotor, Verfahren zur Herstellung desselben und Verwendung desselben**
Small motor, method of manufacture and use thereof
Petit moteur,procédé pour sa fabrication et son utilisation

(43) Veröffentlichungstag der Anmeldung: 03.06.1992
(73) Patentinhaber: Bayerische Motoren Werke Aktiengesellschaft, 80788 München (DE); SAIA AG, CH-3280 Murten (CH)
(72) Erfinder: Thoma, Peter, Dr., W-8044 Hollern (DE); Kuffner, Walter, W-8000 München 40 (DE); Portmann, Urs, CH-1752 Villars-sur-Glanes (CH)
(74) Vertreter: Bullwein, Fritz

(56) Entgegenhaltungen:
- EP-A- 0 256 769
- US-A- 3 506 898
- PATENT ABSTRACTS OF JAPAN vol. 10, no. 79 (E-391)(2136) 28 März 1986 ; & JP-A-60 224 391

## Beschreibung

Kleinmotore, insbesondere Schritt- bzw. Stellmotoren, werden je länger je mehr teils in erheblicher Anzahl zur Verstellung bzw. Einstellung von Organen eingesetzt. Dieser Einsatz erfolgt zum Teil unter extremen Bedingungen, beispielsweise im Automobilbau, wo sie unter erheblichen Temperaturschwankungen in staubiger, schmutziger, feuchter und sogar nasser Umgebung zuverlässig arbeiten sollen. Üblicherweise werden solche Kleinmotoren, insbesondere Schrittmotoren, von einer zentralen Steuerelektronik her angesteuert, was im allgemeinen einen mindestens vieradrigen Kabelanschluß von der zentralen Elektronik zu jedem Motor bedingt und mit einem erheblichen Aufwand verbunden ist. Im übrigen ist die Zahl von Anschlußstellen, welche häufig die Ursache von Unterbrüchen und damit von Betriebsstörungen sind, erheblich.

Aus der EP-A 256 769 ist ein Kleinmotor entsprechend dem Oberbegriff des Patentanspruchs 1 bekannt. Durch die Anordnung der Ansteuerelektronik unmittelbar beim Motor wird eine sichere, direkte Verbindung zwischen der Elektronik und dem Motor ohne jede Verkabelung erzielt. Auch kann die Verkabelung vereinfacht werden, indem die einzelnen Motoren von einer zentralen Steuerelektronik her über einen Datenbus angesteuert und über parallele oder gemeinsame Leiter mit Energie versorgt werden können. Anstelle einer großen Anzahl sternförmig von der Steuerelektronik zu den einzelnen Motoren verlegter Kabel kann ein einziges, im allgemeinen höchstens drei Adern Aufweisen des Kabel auf dem kürzesten Weg von der zentralen Steuerelektronik zu allen Motoren geführt werden.

Ziel vorliegender Erfindung ist es, die Ansteuerung und Verkabelung zu vereinfachen und damit betriebssicherer zu gestalten und außerdem den Motor so zu gestalten, daß er auch unter extremen Betriebsbedingungen, beispielsweise im Motorraum eines Motorfahrzeugs, dauernd zuverlässig arbeitet.

Die Erfindung löst diese Aufgabe durch die kennzeichnenden Merkmale des Patentanspruchs 1.

Vorzugsweise ist die Ansteuerelektronik in einem Kunststoffgehäuse untergebracht, das mit dem Spulenkörper des Motors fest verbunden ist, und dieses Gehäuse ist vorzugsweise mit einem nicht hermetisch dichten Abschlussorgan versehen, welches zwar Staub und Schmutz am Eintreten in den Gehäuseraum hindert, jedoch einen genügenden Dampfaustausch gestattet, um im Gehäuse gebildetes Kondenswasser verdunsten und austreten zu lassen.

Die Erfindung wird nun anhand der Zeichnung näher erläutert.
Fig. 1 ist eine schematische Darstellung des erfindungsgemässen Kleinmotors,
Fig. 2-6 zeigen Ausführungsbeispiele des die Ansteuerelektronik aufnehmenden Gehäuses, und
Fig. 7 zeigt schematisch die Verkabelung zwischen einigen Motoren und einer zentralen Steuerelektronik.

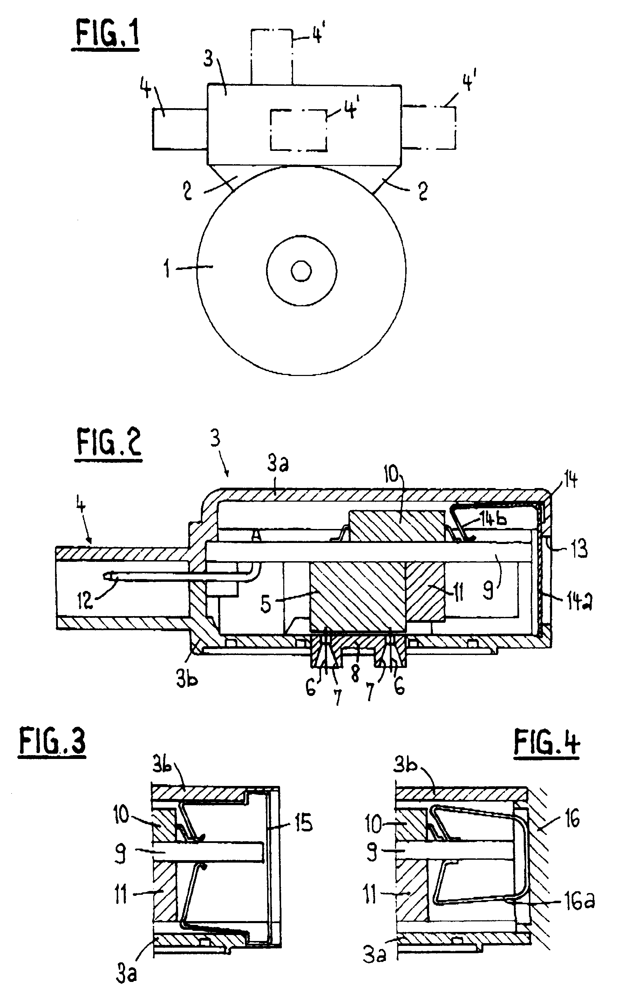

Fig. 1 zeigt rein schematisch einen Klein-Schrittmotor 1. Der aus Kunststoff bestehende Spulenkörper dieses Motor, ist mit einem oder mehreren durch die Statorteile des Motors durchgreifenden Verbindungsfortsätzen 2 versehen, mit welchen ein Kunststoffgehäuse 3 fest verbunden, beispielsweise verklebt oder verschweisst ist. Dieses Kunststoffgehäuse dient der Aufnahme der Ansteuerelektronik für den Motor 1, und es ist mit einer Anschlussbuchse 4 für einem Kabelstecker versehen. In Strichpunklierten Linien ist angedeutet, dass Gehäuseteile vorgesehen sein könnten, die an verschiedenen Stellen mit Anschlussbuchsen 4′ versehen sind, um für alle Anwendungen die günstigste Position dieser Anschlussbuchse wählen zu können.

Fig. 2 zeigt einen Längsschnitt durch ein Ausführungsbeispiel des Gehäuses 3 mit der Elektronik. Es besteht aus einem Gehäuseunterteil 3a und einem damit beispielsweise punktverschweissten Gehäuseoberteil 3b. Im Gehäuseunterteil befindet sich ein Anschlusskörper 5, in welchem sich Kontakte befinden, die mit Anschlussstiften 6 des in Fig. 2 nicht dargestellten Spulenkörpers des Motors 1 eine Steckverbindung bilden. Diese Anschlussstifte 6 durchsetzen konische Führungstüllen 7 eines Führungsteils 8. Zwischen den beiden Gehäuseteilen 3a und 3b ist eine Leiterplatte 9 gehalten, mit welcher ein integrierter Kreis 10 und ein Schaltelement oder eventuell Kühlelement 11 der Elektronik verbunden ist. Mit der Leiterplatte 9 sind Anschlussstifte 12 verlötet, welche in die Anschlussbuchse 4 ragen. Es können beispielsweise drei Kontaktstifte 12 vorgesehen sein. Eine seitliche Gehäuseöffnung 13 ist durch den flachen Schenkel 14a einer L-förmigen Blattfeder 14 abgeschlossen Die Blattfeder 14 ist an ihrem auf die Leiterplatte federnd aufliegenden Enden kammartig in einzelne Zähne 14b aufgeteilt, wobei diese Zähne so bemessen und angeordnet sind, dass sie zwischen Leiterbahnen der Leiterplatte 9 greifen. Die Blattfeder bildet einen nicht ganz hermetischen oder dampfdichten Abschluss des Gehäuses 3, welcher jedoch genügt, um das Eintreten von Staub und Schmutz oder Flüssigkeit zu verhindern, jedoch einen gewissen Dampfaustausch zwischen dem Innenraum des Gehäuses und der Umgebung erlaubt, um Kondenswasser oder Eis, das sich im Gehäuse gebildet hat, verdunsten und austreten zu lassen. Zusätzlich hat die Blattfeder 14 den Zweck, Wärme, die vor allem von den Treiberstufen für den Motor stammen kann, von der Leiterplatte 9 wirksam abzuführen.

Fig. 3 zeigt eine Ausführungsvariante, in der entsprechende Teile gleich bezeichnet sind wie in Fig. 2. Das Abschlussorgan für die Oeffnung des Gehäuses 3 ist wiederum als Blattfeder 15 ausgebildet, die jedoch mit Federenden gegen die Ober- und Unterseite der Leiterplatte 9 anliegt und damit eine noch intensivere Kühlung der Elektronik gewährleistet.

Fig. 4 zeigt eine weitere Ausführungsvariante, gemäss welcher die Oeffnung des Gehäuses 3 mit, einem Kunststoffdeckel 16 verschlossen ist, mit welchem eine Blattfeder 16a ähnlich derjenigen nach Fig. 3 verbunden ist. Diese Blattfeder dient zugleich als Halteorgan für den Deckel 16 und zur Kühlung der Leiterplatte 9.

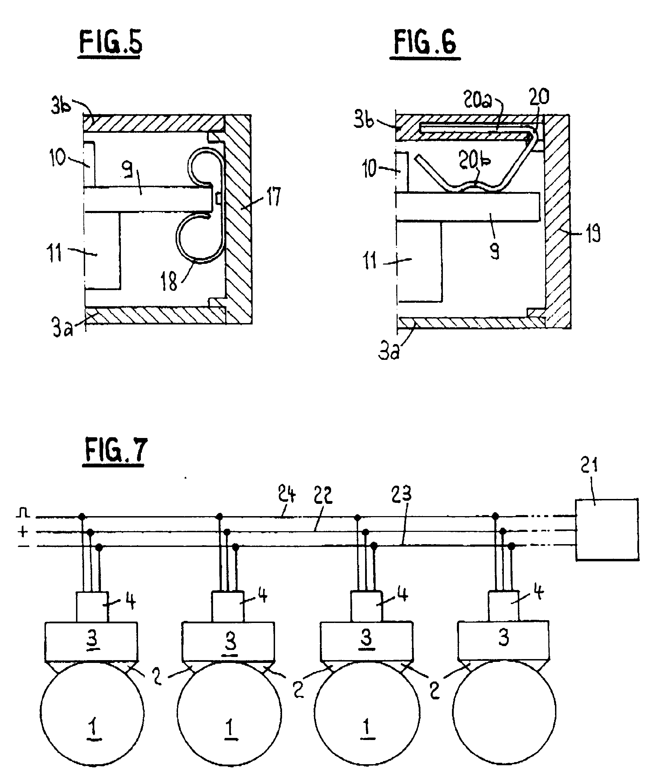

Fig. 5 zeigt eine weitere Ausführungsvariante ähnlich derjenigen nach Fig. 4 mit einem Abschlussorgan 17 aus Kunststoff, welches mit einer anders geformten Blattfeder 18 als Halte- und Kühlorgan versehen ist.

Fig. 6 zeigt eine weitere Ausführungsvariante mit einem Abschlussorgan 19 aus Kunststoff, welches nicht mehr mit einer Haltefeder verbunden ist, sondern mit dem Gehäuse 3 stellenweise verklebt oder verschweisst wird. In eine tiefe Nut des Gehäuseoberteils 3b ist der eine Schenkel 20a einer Blattfeder 20 eingeschoben, deren W-förmiger Teil 20b an zwei Stellen auf der Leiterplatte 9 aufliegt und damit als Kühlelement wirkt.

Fig. 7 zeigt 4 Kleinmotoren 1, die von einer gemeinsamen zentralen Steuerelektronik 21 gesteuert und gespeist werden. Die Ansteuerelektronik ist parallel mit einem dreiadrigen Bus-Kabel verbunden. Wie in Fig. 7 angedeutet, dienen zwei Leiter 22 und 23 dieses Kabels der Energieversorgung der Motoren mit ihrer Ansteuerelektronik, während der Leiter 24 der Signalübertragung dient.

Einer der Leiter 22 und 23 kann der Rückleitung der Steuersignale dienen. Man könnte aber auch mit nur zwei Leitern oder im Extremfall mit einem einzigen Leiter auskommen, nämlich dann, wenn die Rückleitung über die Masse erfolgt, wie dies beispielsweise im Fahrzeugbau üblich ist. Es könnten dann über einen einzigen Leiter zugleich Steuersignale übertragen und Energie zugeführt werden. Die Elektronik jedes Motors weist in diesem Falle Speicher auf, in welche digitalisierte Befehle für die Motorsteuerung eingespeichert werden können. Ausserdem weist die Elektronik jedes Motors einen individuellen Adresscode auf, und die Speicher werden aktiviert, wenn der betreffende Adresscode von der Steuerelektronik 21 gesendet wird. Es kann in dieser Weise jeder Motor bzw. die ihm zugeordnete Ansteuerelektronik individuell aktiviert werden, um Befehlsdaten in die Speicher einzulesen und den zugeordneten Motor diesen Daten entsprechend anzusteuern.

Anstelle der beschriebenen Massnahmen zur Kühlung der Elektronik oder zusätzlich zu denselben kann ein Kunststoffteil oder das Gehäuse satt mit der Leiterplatte verbunden sein. Auch die Anschlussbuchse 4 bzw. die Anschlussstifte 12 können der zusätzlichen Kühlung dienen. Ferner kann ein wärmeleitender Gummi zwischen die Leiterplatte und das Gehäuse eingeklemmt werden. In allen Fällen ist aber darauf zu achten, dass der Austausch bzw. die Abfuhr von Feuchtigkeit gewährleistet ist.

## Patentansprüche

1. Kleinmotor, insbesondere Schritt- oder Stellmotor, dem eine Ansteuerelektronik (9, 10) zugeordnet ist die unmittelbar beim Motor (1) angeordnet ist, dadurch gekennzeichnet, daß die Elektronik (9, 10) in einem Kunststoffgehäuse (3) untergebracht ist, das mit dem Spulenkörper (2) des Motors (1) verbunden, vorzugsweise verschweißt ist, und daß zwischen der Elektronik und den Wicklungsanschlüssen (6) des Motors (1) eine Steckverbindung besteht.

2. Motor noch Anspruch 1, dadurch gekennzeichnet, dass das Gehäuse (3) mit einem nicht hermetisch dichten Abschlussorgan (14,15,16,17,19) abgeschlossen ist.

3. Motor nach einem der Ansprüche 1 oder 2, dadurch gekennzeichnet, dass mindestens ein Teil des Gehäuses (3), vorzugsweise ein Abschlussorgan (14,15,16) desselben, mit der Elektronik, z.B. mit einer Leiterplatte (9), als Kühler in wärmeleitender Verbindung steht.

4. Motor nach Anspruch 3, dadurch gekennzeichnet, dass ein metallisches Abschlussorgan (14,15) oder ein metallischer Halter (16a,18) federnd gegen die Leiterplatte (9) anliegt und im Gehäuse (3) gehalten ist.

5. Motor nach einem der Ansprüche 1-4, dadurch gekennzeichnet, dass ein wärmeleitendes, elektrisch isolierendes Material zwischen die Elektronik (9,10) und die Gehäusewand eingelegt ist.

6. Motor nach einem der Ansprüche 1-5, dadurch gekennzeichnet, dass die Elektronik (10) Speicher für Antriebsbefehle aufweist, die durch einen Adresscode aktivierbar sind.

7. Verfahren zur Herstellung eines Kleinmotors gemäss Anspruch 1, dadurch gekennzeichnet, dass die Motorspule (2) mit Steckanschlüssen (6) und ein die Elektronik (9,10) enthaltendes Gehäuse mit Steckanschlüssen hergestellt und dann zusammengesteckt und fest verbunden werden.

8. Verfahren nach Anspruch 7, dadurch gekennzeichnet, dass nach der Vereinigung der Motorspule (2) mit dem Elektronikgehäuse (3) Statorteile des Motors, insbesondere Schrittmotors (1), montiert werden.

9. Verfahren nach Anspruch 7 oder 8, dadurch gekennzeichnet, dass ein Teil (3a) des Gehäuses (3) mit der Spule (2) verbunden, dann die Elektronik (9,10) eingesetzt und schliesslich das Gehäuse durch Anbringen mindestens eines weiteren Teils (3b,14,15,16,17,19) geschlossen wird.

10. Verwendung von Kleinmotoren gemäss Anspruch 1, dadurch gekennzeichnet, dass die Ansteuerelektronik (9,10) mehrerer Motoren (1) über einen Datenbus (22-24) mit einer zentralen Steuerung (21) verbunden ist.

11. Verwendung nach Anspruch 10, dadurch gekennzeichnet, dass mindestens ein Leiter des Datenbusses (22-24) zugleich der Zufuhr von Antriebsenergic dient.

## Claims

1. A small motor, especially a stepping motor or servomotor, which is associated with an electronic actuating unit (9, 10) disposed directly alongside the motor (1), characterised in that the electronic unit (9,10) is disposed in a plastics casing (3) connected, preferably by welding, to the coil former (2) of the motor (1), and that a plug-in connection exists between the electronic unit and the winding connections (6) of the motor (1).

2. A motor according to claim 1, characterised in that the casing (3) is closed by a non-hermetically sealed closure means (14, 15, 16, 17, 19).

3. A motor according to claim 1 or 2, characterised in that at least a part of the casing (3), preferably a closure means (14, 15, 16) thereof, is used for cooling and is connected in a heat-conducting manner to the electronic unit, e.g. to a circuit board (9).

4. A motor according to claim 3, characterised in that a metal closure means (14, 15) or a metal holder (16a, 18) resiliently abuts the circuit board (9) and is held in the casing (3).

5. A motor according to any one of claims 1 - 4, characterised in that a heat-conducting electrically-insulating material is inserted between the electronic unit (9, 10) and the casing wall.

6. A motor according to any one of claims 1 to 5, characterised in that the electronic unit (1) comprises stores for drive commands activated by an address code.

7. A method of manufacturing a small motor according to claim 1, characterised in that the motor coil (2) and plug-in connections (6) and a casing containing the electronic unit (9, 10) and with plug-in connections are manufactured and then assembled and permanently connected.

8. A method according to claim 7, characterised in that, after the motor coil (2) has been connected to the electronic casing (3), stator parts of the motor, especially of the stepping motor (1), are fitted.

9. A method according to claim 7 or 8, characterised in that a part (3a) of the casing (3) is connected to the coil (2), after which the electronic unit (9, 10) is inserted and, finally, the casing is closed by attaching at least one additional part (3b, 14, 15, 16, 17, 19).

10. Use of small motors according to claim 1, characterised in that the actuating electronic unit (9, 10) of a number of motors (1) is connected by a data bus (22 - 24) to a central control means (21).

11. Use according to claim 10, characterised in that at least one conductor in the data bus (22 - 24) also supplies driving energy.

## Revendications

1. Petit moteur, notamment moteur pas à pas ou moteur de réglage auquel est associée une électronique de commande (9, 10) prévue directement au niveau du moteur (1), caractérisé en ce que l'électronique (9, 10) est logée dans un boîtier en matière plastique (3) relié au corps de bobine (2) du moteur (1), de préférence par une soudure et en ce qu'entre l'électronique et les branchements (6) de l'enroulement du moteur (1), il y a une liaison d'enfichage.

2. Moteur selon la revendication 1, caractérisé en ce que le boîtier (3) est fermé par un organe de fermeture (14, 15, 16, 17, 19), de mesure non hermétiquement étanche.

3. Moteur selon l'une des revendications 1 ou 2, caractérisé en ce qu'au moins une partie du boîtier (3), de préférence un organe de fermeture (14, 15, 16) de celui-ci, est reliée à l'électronique, par exemple à une plaque de circuit imprimé (9), par une liaison conductrice de chaleur et servant de radiateur.

4. Moteur selon la revendication 3, caractérisé par un organe de fermeture métallique (14, 15) ou un organe de maintien métallique (16a, 18) qui est appliqué élastiquement contre la plaque de circuit imprimé 9 et est maintenu dans le boîtier (3).

5. Moteur selon l'une des revendications 1 à 4, caractérisé par un matériau conducteur de chaleur, isolant électrique, prévu entre l'électronique (9, 10) et la paroi du boîtier.

6. Moteur selon l'une des revendications 1 à 5, caractérisé en ce que l'électronique (10) comporte une mémoire pour des ordres d'entraînement qui est activée par un code d'adresse.

7. Procédé de fabrication d'un petit moteur selon la revendication 1, caractérisé en ce que la bobine du moteur (2) est réalisée avec des raccords enfichables (6) et un boîtier logeant l'électronique (9, 10) est muni de raccords enfichables qui sont alors assemblés les uns les autres et solidarisés.

8. Procédé selon la revendication 7, caractérisé en ce que après avoir réuni la bobine (2) du moteur au boîtier (3) de l'électronique, on monte les parties de stator du moteur, notamment du moteur pas à pas (1).

9. Procédé selon la revendication 7 ou 8, caractérisé en ce qu'une partie (3a) du boîtier (3) est reliée à la bobine (2), puis on introduit l'électronique (9, 10) et enfin on ferme le boîtier par la mise en place d'au moins une autre pièce (3b, 14, 16, 16, 17, 19).

10. Application de petits moteurs selon la revendication 1, caractérisée en ce que l'électronique de commande (9, 10) de plusieurs moteurs (1) est reliée par un bus de données (22-24) à une commande centrale (21).

11. Application selon la revendication (10) caractérisée en ce qu'au moins un conducteur du bus de données (22-24) sert en même temps à l'alimentation d'énergie d'entraînement.
